(19) **Europäisches Patentamt / European Patent Office / Office européen des brevets**

(11) **EP 4 683 337 A1**

(12) **EUROPEAN PATENT APPLICATION**
published in accordance with Art. 153(4) EPC

(43) Date of publication:
**21.01.2026 Bulletin 2026/04**

(21) Application number: **24770484.4**

(22) Date of filing: **26.02.2024**

(51) International Patent Classification (IPC):
**H04N 23/55** (2023.01)   **G02B 5/00** (2006.01)
**G02B 5/02** (2006.01)   **G03B 15/00** (2021.01)
**G03B 30/00** (2021.01)   **H04N 23/95** (2023.01)

(52) Cooperative Patent Classification (CPC):
**G02B 5/00; G02B 5/02; G03B 15/00; G03B 30/00; H04N 23/55; H04N 23/95**

(86) International application number:
**PCT/JP2024/006707**

(87) International publication number:
**WO 2024/190372 (19.09.2024 Gazette 2024/38)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **13.03.2023 JP 2023038613**

(71) Applicant: **Sony Group Corporation
Tokyo 108-0075 (JP)**

(72) Inventors:
• **TAKATSUKA Susumu
Tokyo 108-0075 (JP)**
• **IDE Naoki
Tokyo 108-0075 (JP)**
• **UENO Hiroshi
Tokyo 108-0075 (JP)**
• **TETSUKAWA Hiroki
Tokyo 108-0075 (JP)**

(74) Representative: **MFG Patentanwälte
Meyer-Wildhagen Meggle-Freund
Gerhard PartG mbB
Amalienstraße 62
80799 München (DE)**

(54) **OPTICAL ELEMENT AND IMAGING DEVICE**

(57)   The present technology relates to an optical element and an imaging device that can reduce cost required to remove shielding objects adhering to an aperture surface.

An optical element is an optical element that is disposed on an optical path from a subject to an imaging element, and is configured such that a plurality of fine recess parts or protrusion parts are disposed on a surface of the optical element so as to have different ray diffusion characteristics depending on a position on a cross section of an optical path. The present technology is applicable to, for example, installation-type imaging devices to be installed in vehicles, drones, electric poles, ships, or the like, image processing devices that perform image processing of converting a captured image captured by the imaging device into a restored image that is an image of a subject, and optical elements that are provided to installation-type imaging devices of imaging systems including display devices.

Fig. 2

## Description

[Technical Field]

The present technology relates to an optical element and an imaging device, and, more particularly, to an optical element and an imaging device that can reduce cost required to remove shielding objects adhering to an aperture surface.

[Background Art]

Conventionally, a camera is used near a user (photographer), and, even when a shielding object such as dirt adheres to a lens provided on an aperture surface, the user can often remove this shielding object easily. Furthermore, even if a shielding object adheres to the lens, light from the shielding object is dispersed on a light reception surface of an imaging element, and therefore the shielding object often has no influence on captured images. This phenomenon is a phenomenon that occurs when the shielding object is close to the aperture surface, and is similar to, for example, a phenomenon that an image of a landscape photographed through a screen does not include the screen. Therefore, conventionally, there has been no need to discuss shielding objects on the lens.

Recently, miniaturization, cost reduction, and reduction of power consumption of cameras advance, and installation-type cameras such as in-vehicle cameras, security cameras, and live cameras have become popular. Such installation-type cameras photograph a surrounding environment for users to remotely monitor the surrounding environment, and the users do not usually exist near the installation-type cameras. Accordingly, when a shielding object adheres to the lens, it is difficult for a user to remove the shielding object, and it is costly to remove the shielding object.

However, when the shielding object adhered to the lens is left, the shielding object may readily accumulate to such a degree that it is difficult to ensure quality of captured images.

Therefore, there has been devised a method for removing dirt on an in-vehicle camera with a cleaning solution (see, for example, PTL 1 and PTL 2).

However, to remove shielding objects, such a method requires enormous cost such as power consumption of a cleaning solution injection mechanism, labor for filling the cleaning solution, installation of a cleaning solution injection nozzle near an in-vehicle camera, and incorporation of various parts constituting the injection mechanism.

[Citation List]

[Patent Literatures]

[PTL 1]
Japanese Translation of PCT Application No. 2022-547672
[PTL 2]
JP 2022-131226A

[Summary]

[Technical Problem]

In view of the above, although it is demanded to provide a method for reducing the cost required to remove shielding objects adhering to the aperture surface, a situation is that such a demand is not sufficiently met.

With such a situation in view, the present technology can reduce cost required to remove shielding objects adhering to an aperture surface.

[Solution to problem]

An optical element according to a first aspect of the present technology is an optical element that is disposed on an optical path from a subject to an imaging element, and is configured such that a plurality of fine recess parts or protrusion parts are disposed on a surface of the optical element so as to have different ray diffusion characteristics depending on a position on a cross section of an optical path.

According to the first aspect of the present technology, the optical element is disposed on the optical path from the subject to the imaging element, and the plurality of fine recess parts or protrusion parts are disposed on the surface of the optical element so as to have different ray diffusion characteristics depending on positions on the cross section of the optical path.

An imaging device according to a second aspect of the present technology includes: an optical element that is disposed on an optical path from a subject to an imaging element, and is configured such that a plurality of fine recess parts or protrusion parts are disposed on a surface of the optical element so as to have different ray diffusion characteristics depending on a position on a cross section of an optical path; and the imaging element.

According to the second aspect of the present technology, there are provided the optical element that is disposed on the optical path from the subject to the imaging element, and is configured such that the plurality of fine recess parts or protrusion parts are disposed on the surface of the optical element so as to have different ray diffusion characteristics depending on a position on the cross section of the optical path, and the imaging element.

[Brief Description of Drawings]

[Fig. 1]

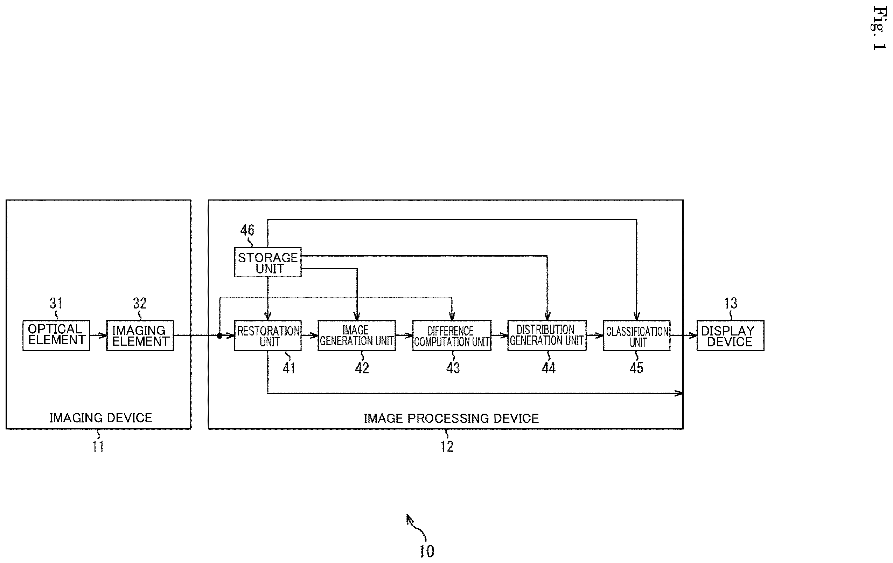

Fig. 1 is a block diagram illustrating a configuration example according to a first embodiment of an imaging system to which the present technology has been applied.

[Fig. 2]

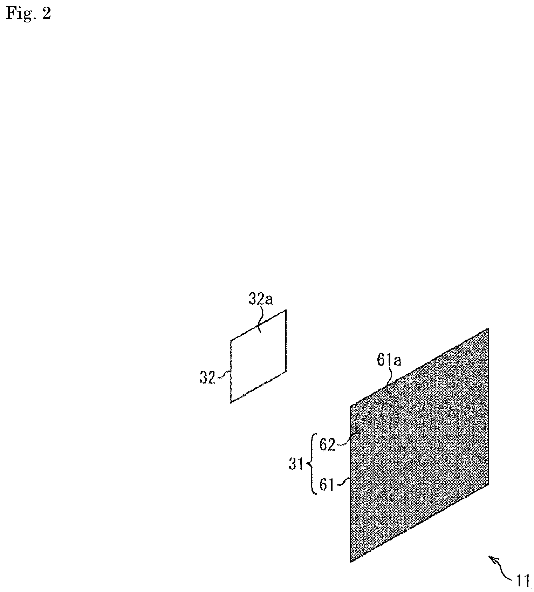

Fig. 2 is a perspective view illustrating a first configuration example of the imaging device in Fig. 1.

[Fig. 3]

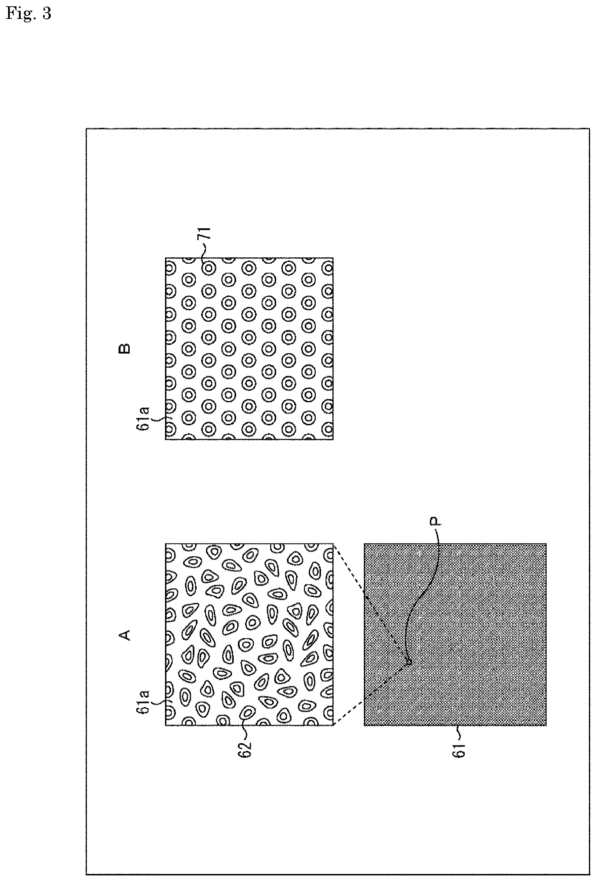

Fig. 3 is a top view illustrating an arrangement example of protrusion parts.

[Fig. 4]

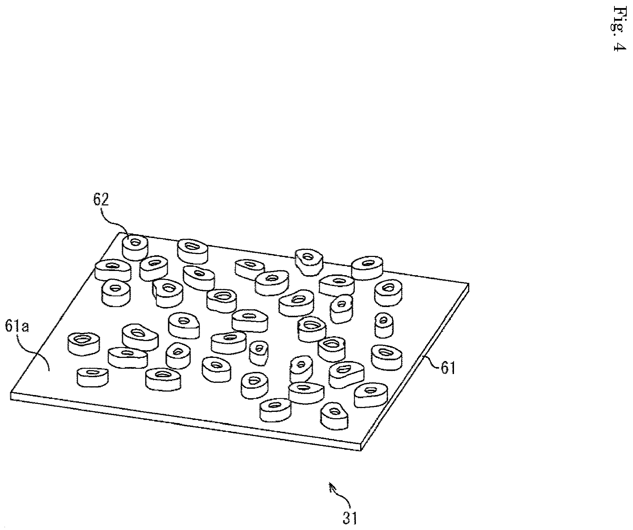

Fig. 4 is a perspective view of an optical element illustrating a shape example of the protrusion parts.

[Fig. 5]

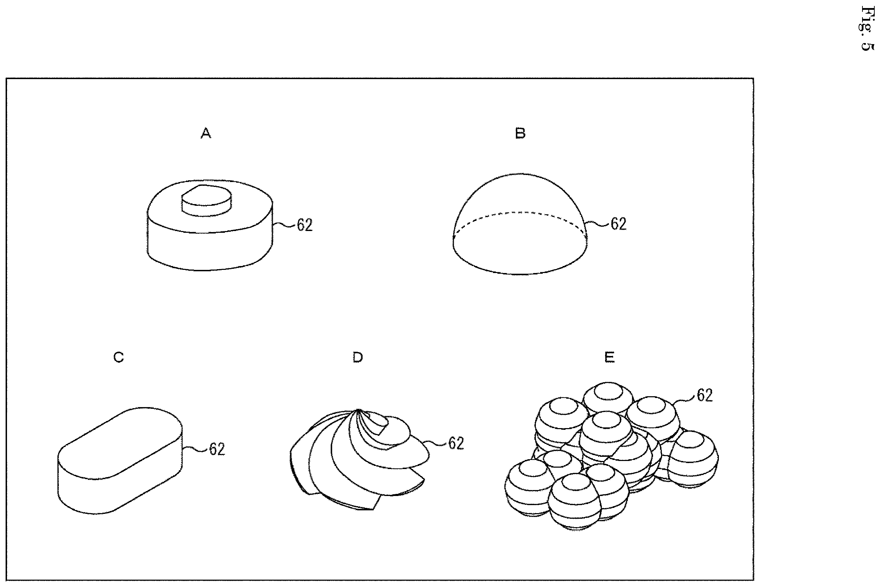

Fig. 5 is a perspective view illustrating other examples of the protrusion parts.

[Fig. 6]

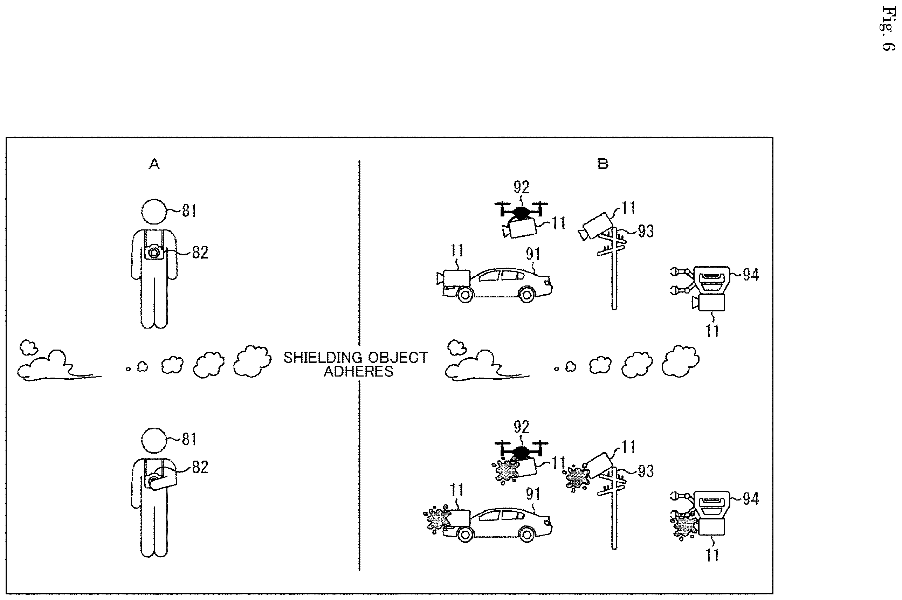

Fig. 6 is a diagram for explaining an effect of an imaging system in Fig. 1.

[Fig. 7]

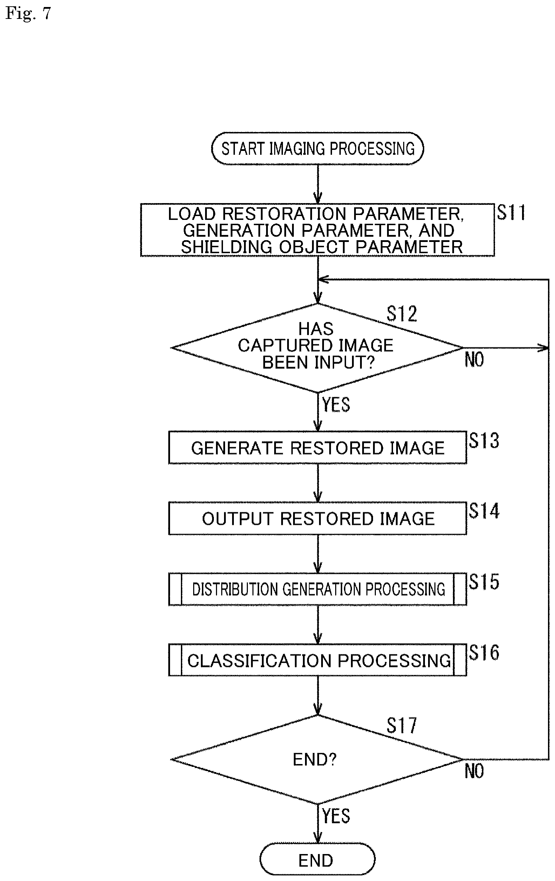

Fig. 7 is a flowchart for explaining image processing of an image processing device in Fig. 1.

[Fig. 8]

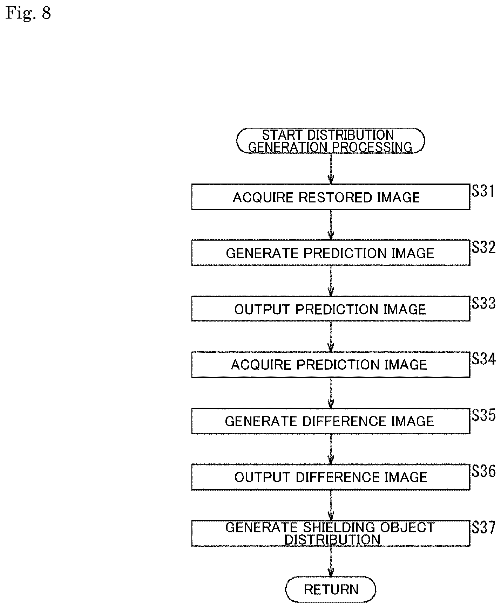

Fig. 8 is a flowchart for explaining distribution generation processing in Fig. 7.

[Fig. 9]

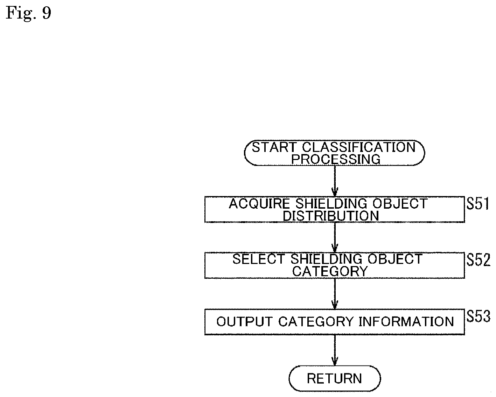

Fig. 9 is a flowchart for explaining classification processing in Fig. 7.

[Fig. 10]

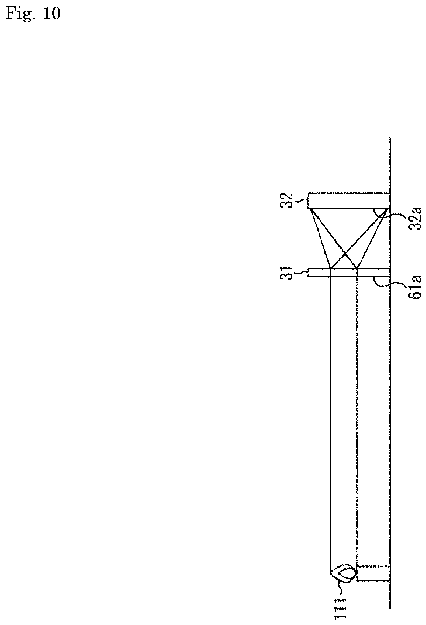

Fig. 10 is a diagram for explaining a ray tracing model of generation processing.

[Fig. 11]

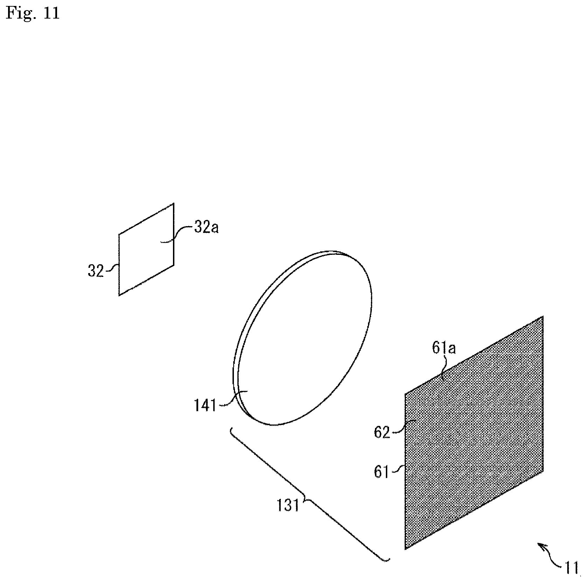

Fig. 11 is a perspective view illustrating a second configuration example of the imaging device in Fig. 1.

[Fig. 12]

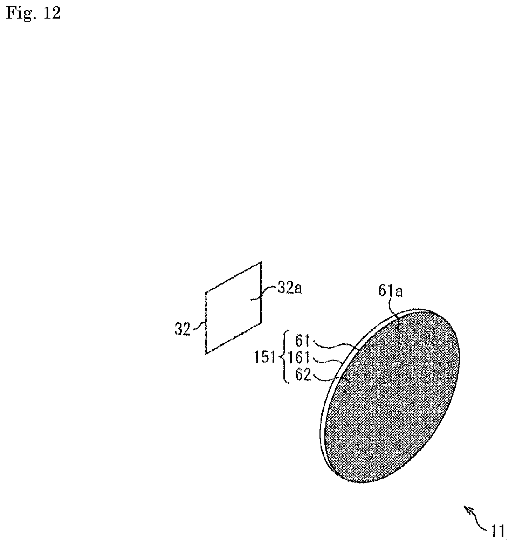

Fig. 12 is a perspective view illustrating a third configuration example of the imaging device in Fig. 1.

[Fig. 13]

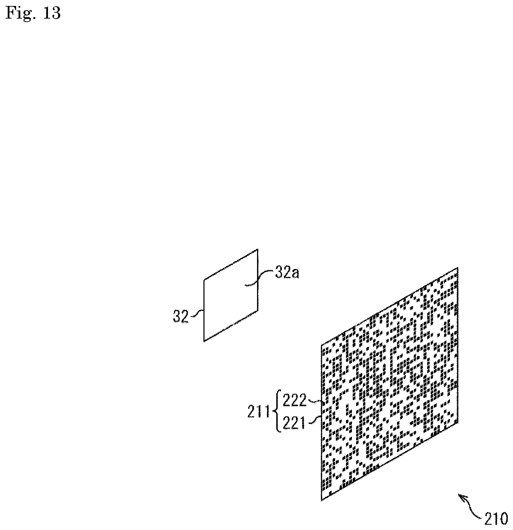

Fig. 13 is a perspective view illustrating a first configuration example of the imaging device according to a second embodiment of the imaging system to which the present technology has been applied.

[Fig. 14]

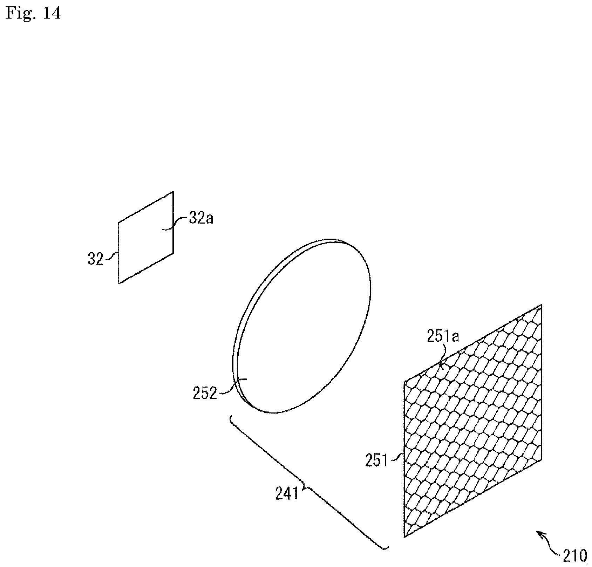

Fig. 14 is a perspective view illustrating a second configuration example of the imaging device in Fig. 13.

[Fig. 15]

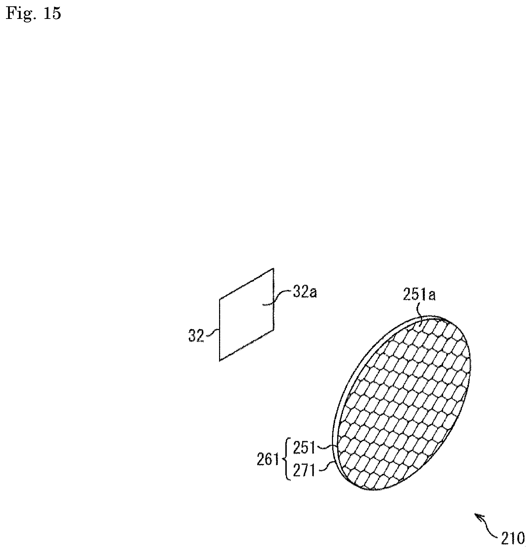

Fig. 15 is a perspective view illustrating a third configuration example of the imaging device in Fig. 13.

[Fig. 16]

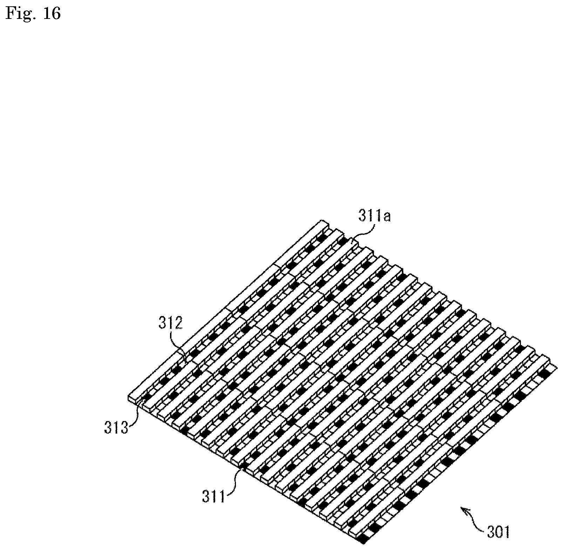

Fig. 16 is a perspective view illustrating a configuration example of an optical element according to a third embodiment of the imaging system to which the present technology has been applied.

[Fig. 17]

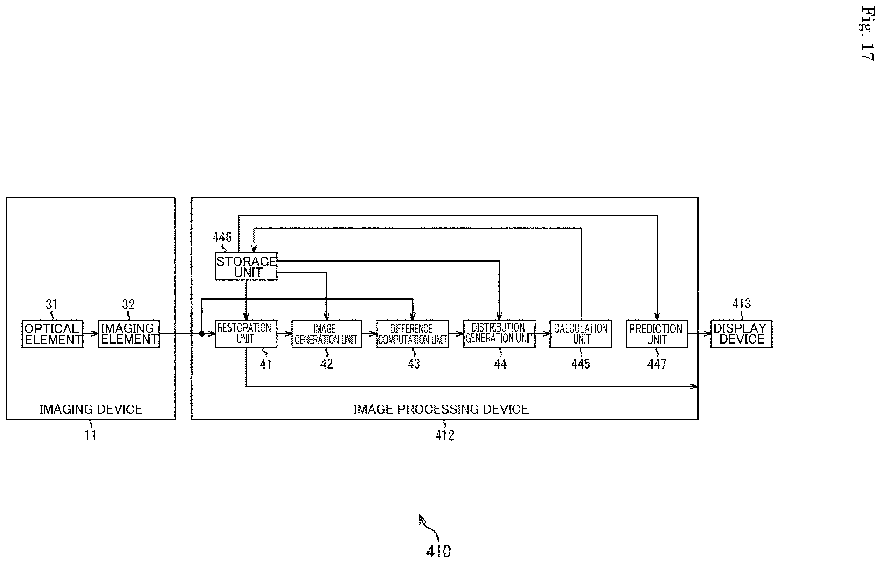

Fig. 17 is a block diagram illustrating a configuration example according to a fourth embodiment of the imaging system to which the present technology has been applied.

[Fig. 18]

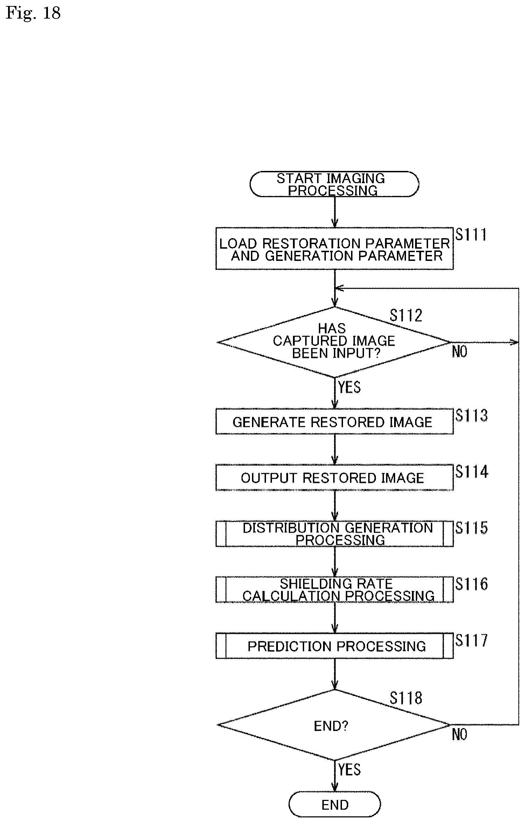

Fig. 18 is a flowchart for explaining image processing of the image processing device in Fig. 17.

[Fig. 19]

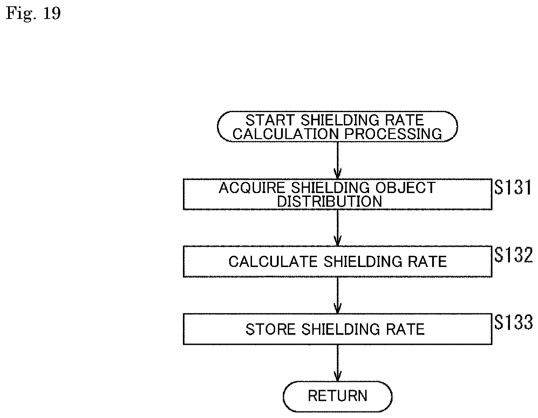

Fig. 19 is a flowchart for explaining shielding rate calculation processing in Fig. 18.

[Fig. 20]

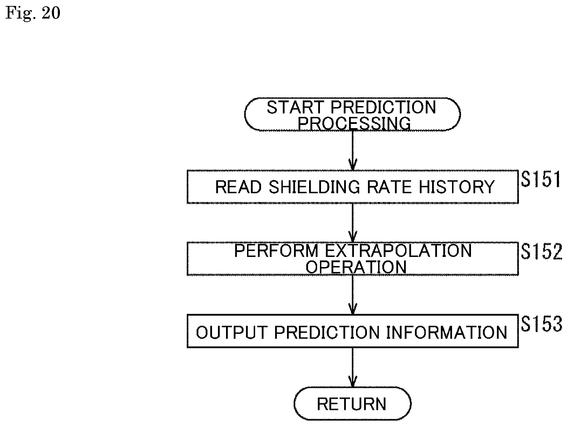

Fig. 20 is a flowchart for explaining prediction processing in Fig. 18.

[Fig. 21]

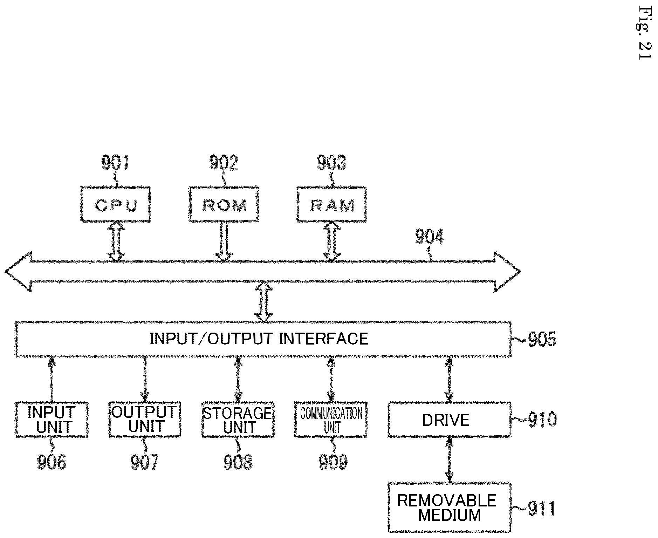

Fig. 21 is a block diagram illustrating a hardware configuration example of a computer.

[Fig. 22]

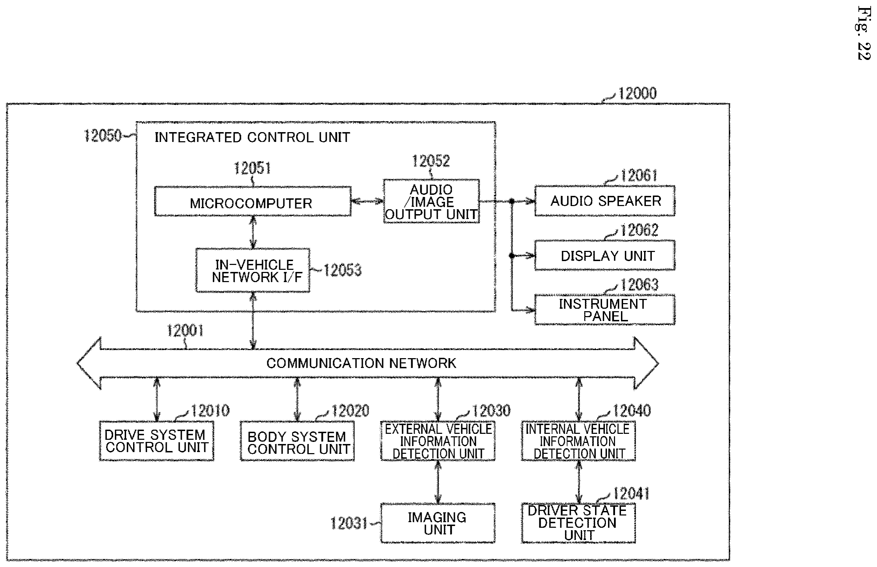

Fig. 22 is a block diagram of an example of a schematic configuration of a vehicle control system.

[Fig. 23]

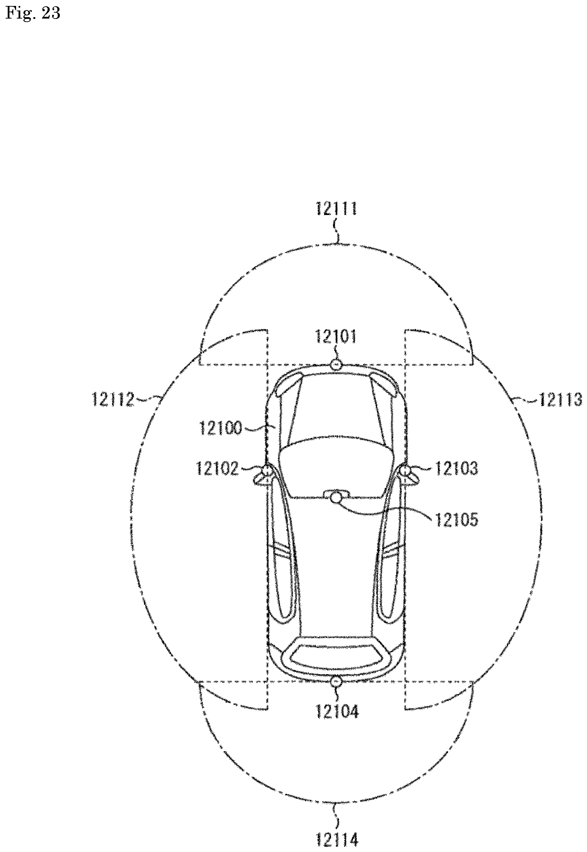

Fig. 23 is an explanatory diagram illustrating an example of installation positions of imaging units.

[Description of Embodiments]

Modes for carrying out the present technology (hereinafter referred to as embodiments) will be described below. Here, the descriptions will be given in the following order.

1. First embodiment (an imaging system having an antifouling structure)
2. Second embodiment (the imaging system having a biofouling structure)
3. Third embodiment (the imaging system having another biofouling structure)
4. Fourth embodiment (the imaging system that predicts a shielding rate)

5. Computer

6. Example of application to moving body

In drawings to be referred to in the following description, same or similar portions are denoted by same or similar reference signs. However, the drawings are schematic and relationships between thicknesses and plan view dimensions, ratios of thicknesses of respective layers, and the like differ from those in real. In addition, drawings include portions where dimensional relationships and ratios differ between the drawings in some cases.

In addition, it is to be understood that definitions of directions such as up-down in the following descriptions are merely definitions provided for the sake of brevity and are not intended to limit the technical spirit of the present disclosure. For example, when an object is observed after being rotated by 90 degrees, up-down is converted into and interpreted as left-right, and when an object is observed after being rotated by 180 degrees, up-down is interpreted as being inverted.

<1. First embodiment>

<Configuration of imaging system>

Fig. 1 is a block diagram of a configuration example according to a first embodiment of an imaging system to which the present technology has been applied.

An imaging system 10 in Fig. 1 includes an installation-type imaging device 11, an image processing device 12, and a display device 13. The imaging system 10 images a subject and outputs an image of the subject, and displays category information indicating a category of a shielding object such as water, snow, mud, a plant liquid agent, excretion, dust, and sessile organisms adhered to the imaging device 11.

More specifically, the imaging device 11 is an installation-type camera (installation-type sensor) including an optical element unit 31 and an imaging element 32. The optical element unit 31 includes an optical element as a coded aperture arranged on an optical path from a subject to the imaging element 32. The surface on the subject side (incident light side) of this optical element has an antifouling structure that prevents (suppresses) adhesion of a shielding object on the aperture surface. Details of this antifouling structure will be described with reference to Figs. 2 to 5 to be described later.

The imaging element 32 includes a synchronous-type image sensor in which a plurality of light reception elements that receive visible light or non-visible light are one-dimensionally or two-dimensionally aligned, an asynchronous-type vision sensor, and a sensor including both the synchronous-type image sensor and the asynchronous-type vision sensor. The imaging element 32 receives light incident from the subject via the optical element unit 31, and images (acquires) a captured image corresponding to this light. Since the light incident on the imaging element 32 is light diffused without the condensing element, this captured image is a non-image formation image. The imaging element 32 supplies the captured image to the image processing device 12.

The image processing device 12 includes a restoration unit 41, an image generation unit 42, a difference computation unit 43, a distribution generation unit 44, a classification unit 45, and a storage unit 46.

The restoration unit 41 performs restoration processing of converting a captured image input from the imaging element 32 into a restored image that is an image formation image of the subject. The principle of this restoration processing is similar to a principle of signal processing in a lensless camera that simulates an image formation process (inverse conversion of an imaging process) by signal processing without providing a lens.

More specifically, the captured image is a non-image formation image showing a shadow of the optical element unit 31 due to the light from the subject. This shadow differs depending on a position of a point light source meeting the subject. For example, assuming that an image formation image of the subject is f, and a function of the shadow of the optical element unit 31 is h, a captured image g can be expressed by following equation (1).

$$g = f * h \ldots (1)$$

Accordingly, the restoration processing is processing of obtaining the image formation image f of the subject as a restored image from the captured image g in equation (1) by deconvolution.

This restoration processing is performed using, for example, a restoration function that is an image conversion function of converting the captured image into a restored image. The restoration function is an approximation function designed as a model of machine learning that receives an input of the captured image and outputs the restored image. Examples of this model include a decoder for an autoencoder of deep learning, a generation model of generative adversarial networks, a transformer (an image transformer in particular), diffusion models, sparse models, and the like. A restoration parameter that is a parameter of the restoration function is optimized in advance for learning data by statistically performing learning using the learning data including an image formation image corresponding to multiple restored images of a subject and a non-image formation image corresponding to the captured image.

Here, the restoration parameter differs per structure (such as arrangement and a size of the antifouling structure) of the optical element unit 31, and therefore a learning device that learns the restoration parameter needs to prepare learning data for each structure of the optical element unit 31, and learn the restoration parameter. However, since the structure of the optical element unit 31 differs per target shielding object, it is assumed that there are various types of structures of the optical element unit 31.

Accordingly, the learning device may include a simulator that simulates an imaging process from the image formation image of the subject through the optical element unit 31 having each of the various types of structures and generate a non-image formation image. In this case, by generating a non-image formation image associated with the optical element unit 31 having each of the various types of structures from the image formation image of one subject, the learning device can make generation of the learning data efficient.

The learning device may set the restoration parameter associated with a predetermined structure of the optical element unit 31 as an initial value of learning of the restoration parameter associated with the structure of the other optical element unit 31, and make learning efficient by learning (transfer learning) this restoration parameter adaptively. As a method for adaptively learning the restoration parameter, learning methods called transfer learning, domain adaptation, one-shot learning, meta learning, and the like can be used.

The restoration parameter may be determined from a physical model such as a ray tracing model. Alternatively, the restoration parameter may be determined using self learning of feeding back to a parameter a difference between a captured image predicted from the restored image and an actual captured image using a ray tracing model (captured image simulator) to be described later.

The restoration parameter associated with the structure of the optical element unit 31 is stored in the storage unit 46. Accordingly, the restoration unit 41 reads the restoration parameter stored in the storage unit 46, and performs restoration processing by computing a restoration function for the captured image using this restoration parameter.

The restoration unit 41 supplies the restored image converted by the restoration processing to the image generation unit 42, and outputs the restored image as a final captured image captured by the imaging device 11 to the outside of the imaging system 10.

The image generation unit 42 reads a generation parameter that is a parameter of a generation function stored in the storage unit 46. The generation function is an image conversion function of converting the restored image into a prediction image of a captured image of a subject when no shielding object adheres to the optical element unit 31. More specifically, the generation function is an approximation function designed as a model of machine learning that receives an input of the restored image and outputs the prediction image. Although an example of this model is considered to be an encoder of the autoencoder of deep learning, this model can be implemented as a generation model of the generative adversarial networks, a transformer, the diffusion model, a sparse model, and the like.

The generation parameter is optimized in advance for learning data by statistically performing learning using learning data including an image formation image corresponding to multiple restored images of a subject and a non-image formation image corresponding to a prediction image. Learning of the generation parameter may be made efficient similarly to the restoration parameter. The generation parameter may be determined from a physical model such as the ray tracing model. Alternatively, the generation parameter may be determined using self learning of feeding back to the parameter a difference between a prediction image predicted using the generation function, and an actual prediction image similarly to the restoration parameter.

The image generation unit 42 performs generation processing of generating a prediction image from the restored image by computing the generation function for the restored image supplied from the restoration unit 41 based on the generation parameter. The image generation unit 42 supplies the prediction image obtained as a result of the generation processing to the difference computation unit 43.

The difference computation unit 43 acquires a captured image input from the imaging element 32 as an actual image. The difference computation unit 43 computes a difference between pixel values of this actual image and the prediction image based on the actual image and the prediction image supplied from the image generation unit 42, and generates a difference image including the differences between the pixel values.

Here, the prediction image is a captured image in a case where no shielding object adheres to the optical element unit 31, and the actual image is a captured image actually captured via the optical element unit 31 to which the shielding object may have adhered. Accordingly, the difference image can be estimated as a non-image formation image of the shielding objects adhering to the optical element unit 31. The difference computation unit 43 supplies the difference image to the distribution generation unit 44.

The distribution generation unit 44 reads the restoration parameter from the storage unit 46. The distribution generation unit 44 performs difference conversion processing of converting the difference image into a shielding object distribution by computing the restoration function for the difference image supplied from the difference computation unit 43 based on this restoration parameter. The shielding object distribution is an estimation value of the image formation image of the shielding object on the optical element unit 31. The distribution generation unit 44 supplies the shielding object distribution generated by the difference conversion processing to the classification unit 45.

The classification unit 45 (output unit) reads the shielding object parameter of each shielding object category stored in the storage unit 46. The shielding object parameter is a parameter of a shielding object distribution function designed as, for example, a model for deep learning indicating a shielding object distribution. The shielding object parameter is intended as not a shielding object parameter at a time when the optical element unit 31 itself for preventing adhesion of the shielding object is a shielding object, but as a shielding parameter for the shielding object adhered to the optical element unit 31. The shielding object parameter for each shielding object category is determined by, for example, performing fitting by deep learning per category using learning data including the shielding object distribution of multiple shielding objects and the categories of these shielding objects.

The classification unit 45 generates a shielding object distribution model by computing a shielding object distribution function using the shielding object parameter for each shielding object category. The classification unit 45 selects as a shielding object category a category associated with the shielding object distribution model that approximates the most to the shielding object distribution among the shielding object distribution models of all categories based on the shielding object distribution supplied from the distribution generation unit 44. The classification unit 45 outputs category information to the display device 13 as shielding object information related to the shielding object on the optical element unit 31.

The storage unit 46 stores the restoration parameter, the generation parameter, and the shielding object parameter.

The display device 13 displays the category information supplied from the classification unit 45. When the category indicated by this category information is a category of a shielding object that is less likely to naturally disappear, a user removes the shielding object by, for example, cleaning the optical element unit 31. When, for example, the category indicated by the category information is mud or excretion that is less likely to naturally disappear, the user removes the shielding object. On the other hand, when the category indicated by the category information is snow that is more likely to naturally disappear as a result of melting, the user does not remove the shielding object. Note that, at this time, when the snow that is the shielding object is less likely to naturally disappear as a result of melting based on weather conditions at an installation place of the imaging device 11, too, the user may remove the shielding object.

As described above, the user can remove the shielding object at an appropriate timing based on the category information, and consequently can efficiently remove the shielding object compared to a case where the user removes the shielding object regardless of the shielding object category. As a result, it is possible to reduce cost required to remove the shielding object.

Note that the image processing device 12 may output the category information not to the display device 13, but to an unillustrated shielding object removal device at a subsequent stage that removes a shielding object by cleaning or the like. In this case, the shielding object removal device determines whether or not to remove the shielding object based on the category information.

The image processing device 12 may include the restoration unit 41 and the storage unit 46, and output only a restored image to the outside.

The image processing device 12 includes the restoration unit 41, the image generation unit 42, the difference computation unit 43, the distribution generation unit 44, and the storage unit 46, and may output the restored image and output the shielding object distribution to the display device 13. In this case, the user can grasp the presence and the amount of the shielding object based on the shielding object distribution displayed on the display device 13. Accordingly, the user can remove the shielding object at an appropriate timing based on the presence or the amount of the shielding object. As a result, it is possible to reduce cost required to remove the shielding object.

The pixel values of pixels of a captured image, a restored image, a prediction image, and a difference image may be brightness values such as RGB values or gray scale values, or may be values corresponding to brightness values such as time differences between the brightness values.

The processing of each unit of the image processing device 12 may be performed on each captured image, or may be collectively performed as parallel processing or batch processing on a plurality of captured images.

The classification unit 45 may output alert information that encourages cleaning, exchange, or the like of the optical element unit 31 as the shielding object information instead of the category information based on the shielding object category. In this case, when, for example, the shielding object category is mud or excretion that is less likely to disappear, the classification unit 45 outputs the alert information. On the other hand, when the shielding object category is the snow that is more likely to naturally disappear as a result of melting, the classification unit 45 does not output the alert information. Note that, at this time, when the snow that is the shielding object is less likely to naturally disappear as a result of melting based on the weather condition of the installation place of the imaging device 11, too, the classification unit 45 may output the alert information.

The classification unit 45 may output removal information such as the adhesion strength and an optimal remover of the shielding object as shielding object information instead of the category information based on the shielding object category. The classification unit 45 may output two or more of the category information, the alert information, and the removal information.

The restoration unit 41 may supply the restored image to the display device 13 to cause the display device 13 to display the restored image.

<Configuration example of imaging device>

Fig. 2 is a perspective view illustrating a first configuration example of the imaging device 11 in Fig. 1.

As illustrated in Fig. 2, in the imaging device 11, the optical element unit 31 is installed at a position that is a predetermined distance apart from a light reception surface 32a of the imaging element 32 toward the subject side.

The optical element unit 31 is an optical element 61 having as the antifouling structure a three-dimensional structure that a surface 61a on a subject side is provided with a plurality of fine protrusion parts 62. By forming the plurality of protrusion parts 62 on the surface 61a of the optical element 61, it is possible to obtain a water-repellent effect, i.e., a so-called Lotus effect of preventing adhesion of droplets to the surface 61a. As a result, the optical element unit 31 can prevent a shielding object from adhering to the surface 61a.

The protrusion part 62 is formed of a material having light permeability for allowing light received by the imaging element 32 to transmit. Consequently, the imaging element 32 can receive light from the subject, and capture a captured image. The light received by the imaging element 32 includes visible light, infrared light, ultraviolet light, and the like.

The optical element unit 31 and the imaging element 32 may be arranged spaced a predetermined interval from each other, or the optical element unit 31 may be adhered to the imaging element 32 in a form such a seal or the like.

<Arrangement example of protrusion part>

Fig. 3 is a top view illustrating an arrangement example of the protrusion parts 62.

The lower stage in A of Fig. 3 is a view illustrating the surface 61a of the optical element 61 viewed from the subject side, and the upper stage in A of Fig. 3 is an enlarged view of a rectangle P in A of Fig. 3.

As illustrated in A of Fig. 3, the protrusion parts 62 are non-periodically arranged on the surface 61a of the optical element 61. That is, an arrangement pattern of the plurality of protrusion parts 62 is a pattern (hereinafter referred to as a low autocorrelation pattern) in which the position of each protrusion part 62 is less correlated. In the first embodiment, the low autocorrelation pattern is a two-dimensionally arranged fine random dot pattern. In a case where the low autocorrelation pattern is the random dot pattern, the low autocorrelation pattern may be a pattern based on a pseudo random number generated by binary coding such as M-sequence coding implemented by M stages (M is an integer of two or more) of shift registers connected in series. In this case, by using a shift register having a long repetition cycle, randomness of the low autocorrelation pattern is secured.

Note that the low autocorrelation pattern may be a point-symmetrical fan-shaped pattern (e.g., a pattern of a Newton's ring shape or a spiral shape) in which a fan-shaped dot pattern having a low correlation between positions of points aligned in a radial direction is attached in point symmetry.

As described above, since the plurality of protrusion parts 62 are non-periodically arranged, that is, the plurality of protrusion parts 62 are arranged so as to have different ray diffusion characteristics depending on the position on the cross section of the optical path, a captured image has features of an image formation image of a subject. Accordingly, robustness of the restoration processing of the restoration unit 41 improves, so that the restoration unit 41 can more reliably generate a restored image.

By contrast with this, as illustrated in B of Fig. 3, in a case where a plurality of protrusion parts 71 are periodically arranged on the surface 61a, that is, in a case where an arrangement pattern of the plurality of protrusion parts 71 is a pattern having a high correlation between the positions of the protrusion parts 71, it may be difficult to perform the restoration processing. When, for example, the periodicity of the arrangement pattern of the plurality of protrusion parts 71 matches with the periodicity of the image formation image of the subject, a captured image does not have features of an image formation image of the subject, and it is difficult to perform the restoration processing.

<Shape example of protrusion part>

Fig. 4 is a perspective view of the optical element unit 31 illustrating a shape example of the protrusion part 62.

In the example in Fig. 4, the shape of the protrusion part 62 of the optical element unit 31 is a substantially elliptical column shape having a recess part at the center. In the example in Fig. 4, shapes and sizes of at least part of the plurality of protrusion parts 62 arranged on the optical element unit 31 are different, yet may be all the same.

<Other shape examples of protrusion parts>

Fig. 5 is a perspective view illustrating other shape examples of the protrusion parts 62.

In the example in A of Fig. 5, the shape of the protrusion part 62 is a substantially elliptical column shape having a protrusion part at the center. In the example in B of Fig. 5, the shape of the protrusion part 62 is a semi-spherical shape. In the example in C of Fig. 5, the shape of the protrusion part 62 is a three-dimensional shape having an identical rounded rectangle as both bottom surfaces. In the example in D of Fig. 5, the shape of the protrusion part 62 is a spiral shape. In the example in E of Fig. 5, the shape of the protrusion part 62 is a shape formed by overlaying a plurality of spheres.

Note that the shape of the protrusion part 62 is not limited to the shapes in Figs. 4 and 5. The optical element 61 may be provided with recess parts instead of the protrusion parts 62, or may be provided with both of the recess parts and protrusion parts.

<Explanation of effect of imaging system>

Fig. 6 is a diagram for explaining an effect of the imaging system 10.

As illustrated in A of Fig. 6, according to an portable-type imaging device 82 carried by a user 81, the user 81 exists near the imaging device 82, so that, when a shielding object adheres to the imaging device 82, the user 81 can notice and remove this shielding object.

However, as illustrated in B of Fig. 6, in a case of the installation-type imaging device 11 to be installed in a vehicle 91, a drone 92, an electric pole 93, a ship 94, or the like, a user does not exist near the imaging device 11. Accordingly, when a shielding object adheres to the imaging device 11, it is difficult for the user to notice and remove this shielding object.

Hence, in the imaging device 11, the optical element 61 of the optical element unit 31 has the plurality of protrusion parts 62 on the surface 61a as the antifouling structure. Consequently, it is possible to prevent the shielding object from adhering to the surface 61a. Furthermore, the imaging device 11 displays the category information on the display device 13, so that, even when the user does not exist near the imaging device 11, the user can notice the shielding object.

<Explanation of image processing>

Fig. 7 is a flowchart for explaining image processing of the image processing device 12 in Fig. 1. This image processing is started when, for example, the power supply of the image processing device 12 is turned on and the image processing device 12 is started.

In step S11 in Fig. 7, the restoration unit 41 and the distribution generation unit 44 of the image processing device 12 load (read) the restoration parameter stored in the storage unit 46. The image generation unit 42 loads the generation parameter stored in the storage unit 46. The classification unit 45 loads the shielding object parameter stored in the storage unit 46.

In step S12, the restoration unit 41 determines whether or not the captured image has been input from the imaging element 32. In a case where it is determined in step S12 that the captured image has not been input yet, the restoration unit 41 stands by until the captured image is input. On the other hand, in a case where it is determined in step S12 that the captured image has been input, the processing proceeds to step S13.

In step S13, the restoration unit 41 performs restoration processing on the captured image input from the imaging element 32 based on the restoration parameter read in step S11, and generates a restored image.

In step S14, the restoration unit 41 outputs the restored image generated in step S13 to the image generation unit 42, and outputs the restored image as a final captured image to the outside of the imaging system 10.

In step S15, the image processing device 12 performs distribution generation processing of generating a shielding object distribution. Details of this distribution generation processing will be described with reference to Fig. 8 to be described later.

After the processing in step S15, in step S16, the classification unit 45 performs classification processing of classifying a shielding object into a category based on the shielding object distribution generated by the distribution generation processing in step S15. Details of this classification processing will be described with reference to Fig. 9 to be described later.

After the processing in step S16, in step S17, the image processing device 12 determines whether or not to end the image processing, that is, determine, for example, whether or not the power supply of the image processing device 12 has been turned off. In a case where it is determined in step S17 to not end the image processing, that is, in a case where, for example, the power supply of the image processing device 12 has not been turned off, the processing then returns to step S12, and the subsequent processing is repeated.

On the other hand, in a case where it is determined in step S17 to end the image processing, that is, in a case where, for example, the power supply of the image processing device 12 has been turned off, the processing is ended.

Note that the image processing device 12 may save driving electrical power by performing image processing only during a pre-scheduled period or performing the image processing only when an event such as input of a captured image is detected.

<Explanation of distribution generation processing>

Fig. 8 is a flowchart for explaining the distribution generation processing in step S15 in Fig. 7.

In step S31 in Fig. 8, the image generation unit 42 acquires the restored image output in step S14 in Fig. 7. In step S32, the image generation unit 42 performs generation processing on the restored image acquired in step S31 based on the generation parameter read in step S11 in Fig. 7, and generates a prediction image. In step S33, the image generation unit 42 outputs the prediction image generated by the processing in step S32 to the difference computation unit 43.

In step S34, the difference computation unit 43 acquires the prediction image output in step S33. In step S35, the difference computation unit 43 generates a difference image based on the prediction image acquired in step S34 and an actual image that is a captured image input from the imaging element 32. In step S36, the difference computation unit 43 outputs the difference image generated in step S35 to the distribution generation unit 44.

In step S37, the distribution generation unit 44 performs difference conversion processing on the difference image output in step S36 based on the restoration parameter read in step S11, and generates a shielding object distribution. The distribution generation unit 44 supplies this shielding object distribution to the classification unit 45. Furthermore, the processing returns to step S15 in Fig. 7, and proceeds to step S16.

<Explanation of classification processing>

Fig. 9 is a flowchart for explaining the classification processing in step S16 in Fig. 7.

In step S51 in Fig. 9, the classification unit 45 acquires the shielding object distribution generated in step S37 in Fig. 8. In step S52, the classification unit 45 selects a category of the shielding object based on the shielding object parameter read in step S11 in Fig. 7 and the shielding object distribution acquired in step S51. In step S53, the classification unit 45 outputs the category information of the category selected in step S52 to the display device 13. In this way, the display device 13 displays the category information. Furthermore, the processing returns to step S16 in Fig. 7, and proceeds to step S17.

Note that the image generation unit 42 may perform the generating processing by simulating an imaging process using a physical model such as the ray tracing model.

<Explanation of ray tracing model>

Fig. 10 is a diagram for explaining the ray tracing model of the generation processing in this case.

As illustrated in Fig. 10, the ray tracing model of the generation processing is a model that is incident on the light reception surface 32a from the subject 111 corresponding to the restored image via the optical element unit 31 to which a shielding object is not adhered. In this ray tracing model, the subject 111 is sufficiently separated from the optical element unit 31, and light reaching the optical element unit 31 from the subject 111 is a parallel ray. The light reaching the light reception surface 32a from the optical element unit 31 is the light widely diffused from each protrusion part 62 arranged on the surface 61a to the entire light reception surface 32a, and is expressed by a point spread function. Accordingly, the generation processing is processing of performing a convolution operation of a spread function on the restored image.

<Second configuration example of imaging device>

Fig. 11 is a perspective view illustrating a second configuration example of the imaging device 11 in Fig. 1.

In the imaging device 11 in Fig. 11, units corresponding to those of the imaging device 11 in Fig. 2 are denoted by the same reference numerals. Hence, description of the corresponding units will be omitted as appropriate, and the description will focus on the units different from those of the imaging device 11 in Fig. 2. The imaging device 11 in Fig. 11 differs from the imaging device 11 in Fig. 2 in including an optical element unit 131 instead of the optical element unit 31, and the other components are configured similarly to the imaging device 11 in Fig. 2.

The optical element unit 131 includes the optical element 61 in which the plurality of protrusion parts 62 are non-periodically arranged on the surface 61a, and a condensing element 141 in order from the subject side. That is, in the optical element unit 131, the condensing element 141 is installed at a position (a position on an optical path) that is between the optical element 61 and the imaging element 32 and meets the light reception surface 32a of the imaging element 32. The condensing element 141 includes a convex lens, a concave mirror, or the like. In the case where the condensing element 141 includes the concave mirror or the like, the positional relationship between the optical element unit 131, the imaging element 32, and the subject is different from the positional relationship in Fig. 11. In this case, in a case where the light is incident on the imaging element 32 via the protrusion parts 62, the protrusion parts 62 may not have light permeability.

In the imaging device 11 in Fig. 11, the light incident on the imaging element 32 is condensed through the condensing element 141, and is formed as an image on the light reception surface 32a. Accordingly, the captured image is an image formation image. Accordingly, the distribution generation unit 44 may not perform the difference conversion processing, and may use a difference image as a shielding object distribution as it is. The restoration unit 41 may output the captured image input from the imaging element 32 as a final captured image as it is.

<Third configuration example of imaging device>

Fig. 12 is a perspective view illustrating a third configuration example of the imaging device 11 in Fig. 1.

In the imaging device 11 in Fig. 12, units corresponding to those of the imaging device 11 in Fig. 2 are denoted by the same reference numerals. Hence, description of the corresponding units will be omitted as appropriate, and the description will focus on the units different from those of the imaging device 11 in Fig. 2. The imaging device 11 in Fig. 12 differs from the imaging device 11 in Fig. 2 in including an optical element unit 151 instead of the optical element unit 31, and the other components are configured similarly to the imaging device 11 in Fig. 2.

The optical element unit 151 includes a condensing element 161 in which the optical element 61 including the plurality of protrusion parts 62 non-periodically arranged on the surface 61a has been formed on the surface on the subject side. The condensing element 161 includes a convex lens, a concave mirror, or the like. In the case where the condensing element 161 includes the concave mirror or the like, the positional relationship between the optical element unit 131, the imaging element 32, and the subject is different from the positional relationship in Fig. 12. In this case, in a case where the light is incident on the imaging element 32 via the protrusion parts 62, the protrusion parts 62 may not have light permeability.

In the imaging device 11 in Fig. 12, the light incident on the imaging element 32 is condensed through the condensing element 161 and is formed as an image on the light reception surface 32a. Accordingly, the captured image is an image formation image. Accordingly, similarly to the imaging device 11 in Fig. 11, the distribution generation unit 44 may use the difference image as the shielding object distribution as it is, or the restoration unit 41 may output the captured image input from the imaging element 32 as a final captured image as it is.

As described above, the optical element unit 31 (131 and 151) includes the optical element 61 installed closer to the subject side than the imaging element 32, and the plurality of protrusion parts 62 are disposed on the surface 61a of the optical element 61. Accordingly, it is possible to suppress adhesion of shielding objects to the surface 61a, and, as a result, reduce cost required to remove the shielding objects.

The plurality of protrusion parts 62 are non-periodically arranged on the surface 61a, so that the restoration unit 41 can more reliably convert the captured image into a restored image.

The restoration unit 41 restores the restored image from the captured image. Accordingly, by outputting this restored image as a final captured image captured by the imaging device 11, the restoration unit 41 can suppress deterioration of image quality of the captured image due to the optical element unit 31 (131 and 151) and the shielding objects.

Note that the restoration function and the generation function of the image processing device 12 differ depending on the optical element unit 31 (131 and 151).

<2. Second embodiment>

<First configuration example of imaging device>

The configuration of the optical element, and the restoration function and the generation function in the configuration according to the second embodiment of the imaging system to which the present technology has been applied are different from those of the first embodiment, and the others are similar to those of the first embodiment. Accordingly, the description will be made focusing on the imaging device including the optical element, and the description of the units other than the imaging device will be omitted.

Fig. 13 is a perspective view illustrating a first configuration example of the imaging device according to the second embodiment of the imaging system to which the present technology has been applied.

In the imaging device 210 in Fig. 13, units corresponding to those of the imaging device 11 in Fig. 2 are denoted by the same reference numerals. Hence, description of the corresponding units will be omitted as appropriate, and the description will focus on the units different from those of the imaging device 11. The imaging device 210 differs from the imaging device 11 in including an optical element unit 211 instead of the optical element unit 31, and the other components are configured similarly to the imaging device 11. The imaging device 210 is installed in a ship or the like, and prevents adhesion of sessile organisms such as bacteria, barnacles, and algae among shielding objects.

The optical element unit 211 includes an optical element 221 as a coded aperture arranged on an optical path from a subject to the imaging element 32. This optical element 221 is formed of an opaque repellent material for the sessile organisms, and has a biofouling structure that prevents (suppresses) adhesion of the sessile organisms to the aperture surface.

The repellent material for the sessile organisms is a sheet-like (plate-like) material that is disliked by the sessile organisms that are highly likely to adhere to the optical element unit 211, and is a sheet to which a synthetic metal such as copper or a copper alloy, a sheet such as polymer, a chemical substance such as an isonitrile compound disliked by the sessile organisms, or the like has been applied. In a case where the repellent material for the sessile organisms is not a sheet to which the chemical substance has been applied, it is not necessary to apply again the chemical substance or exchange the optical element 221 to keep the repellent effect.

A plurality of the fine holes 222 are non-periodically arranged in the optical element 221. That is, an arrangement pattern of the plurality of fine holes 222 is a low autocorrelation pattern. Thus, the optical element 221 has ray diffusion characteristics that vary depending on a position on the cross section of the optical path. The imaging element 32 receives light from the subject through the plurality of fine holes 222. Since this light is diffracted by the plurality of fine holes 222, the restoration function and the generation function according to the second embodiment are different from those in the first embodiment. Note that the optical element 221 may be provided with a pin hole instead of the fine holes 222.

<Second configuration example of imaging device>

Fig. 14 is a perspective view illustrating a second configuration example of the imaging device 210 illustrated in Fig. 13.

In the imaging device 210 in Fig. 14, units corresponding to those of the imaging device 210 in Fig. 13 are denoted by the same reference numerals. Hence, description of the corresponding units will be omitted as appropriate, and the description will focus on the units different from those of the imaging device 210 in Fig. 13. The imaging device 210 in Fig. 14 differs from the imaging device 210 in Fig. 13 in including an optical element unit 241 instead of the optical element unit 211, and the other components are configured similarly to the imaging device 210 in Fig. 13.

The optical element unit 241 includes an optical element 251 of mesh shapes formed of a repellent material for sessile organisms and a condensing element 252 in order from the subject side. The optical element unit 241 is installed at a position meeting the light reception surface 32a closer to the subject side than the imaging element 32. Accordingly, the condensing element 252 is installed between the imaging element 32 and the optical element 251. The condensing element 252 includes a convex lens, a concave mirror, or the like.

In the imaging device 210 in Fig. 14, light from the subject passes through a mesh 251a of the optical element 251 and enters the condensing element 252. The condensing element 252 condenses this light and forms an image on the light reception surface 32a of the imaging element 32. Accordingly, the captured image is an image formation image. Accordingly, similarly to the imaging device 11 in Fig. 11, the distribution generation unit 44 may use the difference image as the shielding object distribution as it is, or the restoration unit 41 may output the captured image input from the imaging element 32 as a final captured image as it is.

<Third configuration example of imaging device>

Fig. 15 is a perspective view illustrating a third configuration example of the imaging device 210 illustrated in Fig. 13.

In the imaging device 210 in Fig. 15, units corresponding to those of the imaging device 210 in Fig. 13 are denoted by the same reference numerals. Hence, description of the corresponding units will be omitted as appropriate, and the description will focus on the units different from those of the imaging device 210 in Fig. 13. The imaging device 210 in Fig. 15 differs from the imaging device 210 in Fig. 13 in including an optical element unit 261 instead of the optical element unit 211, and the other components are configured similarly to the imaging device 210 in Fig. 13.

The optical element unit 261 includes a condensing element 271 in which the optical element 251 of the mesh shape including the mesh 251a is formed on the surface on the subject side. The condensing element 271 includes a convex lens, a concave mirror, or the like.

In the imaging device 210 in Fig. 15, light from the subject passes through the mesh 251a of the optical element 251 and enters the condensing element 271. The condensing element 271 condenses this light and forms an image on the light reception surface 32a of the imaging element 32. Accordingly, the captured image is an image formation image. Accordingly, similarly to the imaging device 11 in Fig. 11, the distribution generation unit 44 may use the difference image as the shielding object distribution as it is, or the restoration unit 41 may output the captured image input from the imaging element 32 as a final captured image as it is.

Note that the imaging device 210 in Fig. 13 may be provided with an optical element 251 instead of the optical element 221. The imaging device 210 in Figs. 14 and 15 may be provided with the optical element 221 instead of the optical element 251.

As described above, the optical element unit 211 (241 and 261) includes the optical element 221 (251) installed closer to the subject side than the imaging element 32 and formed of a repellent material for sessile organisms. Accordingly, it is possible to suppress adhesion of shielding objects to the optical element 221 (251), and, as a result, reduce cost required to remove these shielding objects.

The plurality of fine holes 222 are non-periodically arranged in the optical element 221, so that robustness of the restoration processing of the restoration unit 41 improves compared to case where the plurality of fine holes 222 are periodically arranged, and it is possible to more reliably convert the captured image into a restored image.

Also in the second embodiment, the restoration unit 41 restores the restored image from the captured image. Accordingly, similarly to the first embodiment, the restoration unit 41 can suppress deterioration of image quality of the captured image due to the optical element unit 211 (241 and 261) and the shielding objects.

<3. Third embodiment>

<Configuration example of optical element>

The configuration of the optical element, and the restoration function and the generation function in the configuration according to the third embodiment of the imaging system to which the present technology has been applied are different from those of the first embodiment, and the others are similar to those of the first embodiment. Accordingly, the description will be made focusing on the optical element, and the description of the units other than the optical element will be omitted. Similarly to the second embodiment, in the third embodiment, the imaging device is installed in a ship or the like to prevent adhesion of sessile organisms among shielding objects.

Fig. 16 is a perspective view illustrating a configuration example of an optical element according to the third embodiment of the imaging system to which the present technology has been applied.

The optical element unit 301 in Fig. 16 includes an optical element 311 as a coded aperture arranged on the optical path from a subject to the imaging element 32. The optical element 311 is formed of an opaque repellent material for sessile organisms. On a surface 311a on the subject side of the optical element 311, a plurality of fine groove parts 312 (grooves) are arranged as another biofouling structure so as to have predetermined orientation and periodicity that some organisms dislike. In the groove part 312, a plurality of fine holes 313 penetrating the optical element 311 are non-periodically arranged. Note that the optical element 311 may not be formed of a repellent material. The plurality of groove parts 312 may be arranged to have at least one of predetermined orientation and periodicity.

As described above, the plurality of groove parts 312 are arranged in the optical element 311, so that it is possible to suppress adhesion of sessile organisms or the like to the surface 311a. As a result, it is possible to reduce the cost required to remove sessile organisms or the like.

The plurality of fine holes 313 are non-periodically arranged in the optical element 311, so that it is possible to more reliably convert the captured image into a restored image similarly to the optical element 221.

Also in the third embodiment, the restoration unit 41 restores the restored image from the captured image. Accordingly, similarly to the first embodiment, the restoration unit 41 can suppress deterioration of the image quality of the captured image due to the optical element unit 301 and the shielding object.

Note that, in the second embodiment and the third embodiment, the correlation between the sizes of the fine holes 222 (313) may be made low.

<4. Fourth embodiment>

Fig. 17 is a block diagram illustrating a configuration example according to a fourth embodiment of the imaging system to which the present technology has been applied.

In an imaging system 410 in Fig. 17, units corresponding to those of the imaging system 10 in Fig. 1 are denoted by the same reference numerals. Therefore, description of the corresponding units will be omitted as appropriate, and the description will focus on the units different from those of the imaging system 10. The imaging system 410 differs from the imaging system 10 in including an image processing device 412 and a display device 413 instead of the image processing device 12 and the display device 13, and the other components are configured similarly to the imaging system 10. The imaging system 410 displays not category information but prediction information indicating a prediction value of a shielding rate as the shielding object information.

More specifically, the image processing device 412 differs from the image processing device 12 in not including the classification unit 45, including a calculation unit 445 and a prediction unit 447, and including a storage unit 446 instead of the storage unit 46, and the other components are configured similarly to the image processing device 12.

The calculation unit 445 calculates the rate of the shielding objects occupying the light reception surface 32a as a current shielding rate based on the shielding object distribution generated by the distribution generation unit 44. The calculation unit 445 supplies the current shielding rate to the storage unit 446 to cause the storage unit 446 to store the current shielding rate.

The storage unit 446 stores the restoration parameter and the generation parameter. The storage unit 446 stores a history of current shielding rates supplied from the calculation unit 445.

The prediction unit 447 reads the history of the current shielding rates from the storage unit 446. The prediction unit 447 performs an extrapolation operation for fitting a linear function, an exponential function, a logarithmic function, or the like with parameters to a time transition of the shielding rate based on this history, and extrapolating a future shielding rate. The prediction unit 447 (output unit) outputs prediction information indicating the extrapolated future shielding rate as a prediction value of the shielding rate to the display device 413.

The display device 413 displays the prediction information supplied from the prediction unit 447. The user removes shielding objects when the shielding rate indicated by this prediction information exceeds a threshold. Consequently, the user can remove the shielding objects before image quality of a captured image deteriorates due to the shielding objects. Consequently, the user can remove the shielding objects at an appropriate timing based on the prediction information, and consequently can efficiently remove the shielding objects compared to a case where the user removes the shielding objects at a certain cycle. As a result, it is possible to reduce cost required to remove the shielding objects.

Note that the image processing device 412 may output the prediction information not to the display device 413, but to an unillustrated shielding object removal device at a subsequent stage. In this case, the shielding object removal device determines whether or not to remove the shielding object based on the prediction information.

The image processing device 412 may not include the prediction unit 447, and may output shielding rate information related to the current shielding rate calculated by the calculation unit 445 (output unit) as the shielding object information to the display device 413 to cause the display device 413 to display the shielding object information. The shielding rate information includes information indicating the current shielding rate, the alert information that encourages cleaning, exchange, or the like of the optical element unit 31 based on the current shielding rate, and the like.

The prediction unit 447 may output information related to a predicted value of the shielding rate other than the prediction information as shielding object information. For example, the prediction unit 447 may output the alert information that encourages exchange of the optical element unit 31 as shielding object information when the shielding rate indicated by the prediction information exceeds a specification standard range. That is, when the shielding rate indicated by the prediction information exceeds the range of the specification standard, deterioration of the antifouling function of the optical element unit 31 is predicted. Accordingly, the prediction unit 447 outputs alert information that encourages exchange of the optical element unit 31 to encourage the user to exchange the optical element unit 31. Consequently, the user can exchange the optical element unit 31 before the antifouling function of the optical element unit 31 deteriorates and the image quality of the captured image deteriorates. Note that the prediction unit 447 may output the alert information that encourages removal of the shielding objects when the shielding rate indicated by the prediction information exceeds the threshold. The prediction unit 447 may output both of the prediction information and the alert information.

<Explanation of image processing>

Fig. 18 is a flowchart for explaining image processing of the image processing device 412 in Fig. 17. This image processing is started when, for example, the power supply of the image processing device 412 is turned on and the image processing device 412 is started.

In step S111 in Fig. 18, the restoration unit 41 and the distribution generation unit 44 of the image processing device 412 load the restoration parameter stored in the storage unit 446. The image generation unit 42 loads the generation parameter stored in the storage unit 446.

Processing in steps S112 to S115 is the same as processing in steps S12 to S15 in Fig. 7.

After the processing in step S115, in step S116, the calculation unit 445 performs shielding rate calculation processing of calculating a current shielding rate based on the shielding object distribution generated by the distribution generation processing in step S115. Details of this shielding rate calculation processing will be described with reference to Fig. 19 to be described later.

After the processing in step S116, in step S117, the prediction unit 447 performs prediction processing of extrapolating a future shielding rate. Details of this prediction processing will be described with reference to Fig. 20 to be described later.

After the processing in step S117, the processing proceeds to step S118. Since the processing in step S118 is the same as the processing in step S17 in Fig. 7, the description thereof will be omitted.

Note that the image processing device 412 may save driving electrical power by performing image processing only during a pre-scheduled period or performing the image processing only when an event such as input of a captured image is detected.

The shielding rate calculation processing in step S116 and the prediction processing in step S117 may be performed regularly instead of being performed every time a captured image is input.

<Explanation of shielding rate calculation processing>

Fig. 19 is a flowchart for explaining the shielding rate calculation processing in step S116 in Fig. 18.

In step S131 in Fig. 19, the calculation unit 445 acquires from the distribution generation unit 44 the shielding object distribution generated by the distribution generation processing in step S115 in Fig. 18. In step S132, the calculation unit 445 calculates the current shielding rate based on the shielding object distribution acquired in step S131. In step S133, the calculation unit 445 supplies the current shielding rate calculated in step S132 to the storage unit 446 to cause the storage unit 446 to store the current shielding rate. Furthermore, the processing returns to step S116 in Fig. 18, and proceeds to step S117.

<Explanation of prediction processing>

Fig. 20 is a flowchart for explaining the prediction processing in step S117 in Fig. 18.

In step S151 in Fig. 20, the prediction unit 447 reads the history of the current shielding rates from the storage unit 446. In step S152, the prediction unit 447 performs an extrapolation operation based on the history read in step S151 to extrapolate a future shielding rate. In step S153, the prediction unit 447 outputs to the display device 413 prediction information indicating the future shielding rate extrapolated in step S153 as a prediction value of the shielding rate. Consequently, the display device 413 displays the prediction information. Furthermore, the processing returns to the processing in step S117 in Fig. 18, and proceeds to the processing in step S118.

The imaging system 410 may include the optical element unit 131, 151, 211, 241, 261, or 301 instead of the optical element unit 31. The calculation unit 445 may calculate the current shielding rate based on a scalar quantity such as an average brightness of the shielding object instead of the shielding object distribution. In this case, it is possible to reduce calculation cost compared to a case where cost is calculated based on the shielding object distribution that is a multidimensional quantity.

The imaging element 32 may be a sensor such as a microwave sensor that detects other electromagnetic waves. The imaging system 10 (410) may output a captured image captured by the imaging element 32 as is instead of a restored image.

<5. Computer>

The series of processing of the image processing device 12 (412) described above can be executed by hardware or can be executed by software. When the series of processing is executed by software, a program of the software is installed in a computer. Here, the computer includes, for example, a computer embedded in dedicated hardware or a general-purpose personal computer capable of executing various functions by installing various programs.

Fig. 21 is a block diagram illustrating a hardware configuration example of a computer that executes the series of processing of the above-described image processing device 12 (412) by the programs.

In the computer, a Central Processing Unit (CPU) 901, a Read Only Memory (ROM) 902, and a Random Access Memory (RAM) 903 are connected to one another by a bus 904.

An input/output interface 905 is further connected to the bus 904. An input unit 906, an output unit 907, a storage unit 908, a communication unit 909, and a drive 910 are connected to the input/output interface 905.

The input unit 906 is constituted of a keyboard, a mouse, a microphone, or the like. The output unit 907 is constituted of a speaker, the display device 13 (413), or the like. The storage unit 908 may be a hard disk, a non-volatile memory, or the like. The communication unit 909 may be a network interface or the like. The drive 910 drives a removable medium 911 such as a magnetic disk, an optical disc, a magneto-optical disk, or a semiconductor memory.

In the computer configured as described above, for example, the CPU 901 loads a program stored in the storage unit 908 into the RAM 903 via the input/output interface 905 and the bus 904 and executes the program to perform the series of processing described above.

The program to be executed by the computer (CPU 901) can be recorded on, for example, the removable medium 911 serving as a package medium for supply. Furthermore, the program can be also provided through a wired or wireless transmission medium such as a local area network, the Internet, or digital satellite broadcasting.

In the computer, by mounting the removable medium 911 on the drive 910, it is possible to install the program in the storage unit 908 via the input/output interface 905. The program can be received by the communication unit 909 via a wired or wireless transmission medium to be installed in the storage unit 908. In addition, the program can be installed in advance in the ROM 902 or the storage unit 908.

The program executed by a computer may be a program that performs processing in time series in order described in the present specification or may be a program that performs processing in parallel or at a necessary timing such as when a called is made.

The series of processing of the image processing device 12 (412) may be executed by a Graphics Processing Unit (GPU).

<6. Application example to mobile object>

The technology of the present disclosure (the present technology) can be applied to various products. For example, the technology according to the present disclosure may be implemented as a device equipped in any type of a moving body such as an automobile, an electric vehicle, a hybrid electric vehicle, a motorcycle, a bicycle, a personal mobility device, an airplane, a drone, a ship, and a robot.

Fig. 22 is a block diagram illustrating a schematic configuration example of a vehicle control system, which is an example of a mobile control system to which the technology according to the present disclosure is applicable.

A vehicle control system 12000 includes a plurality of electronic control units connected thereto via a communication network 12001. In the example illustrated in Fig. 22, the vehicle control system 12000 includes a drive system control unit 12010, a body system control unit 12020, an external vehicle information detection unit 12030, an internal vehicle information detection unit 12040, and an integrated control unit 12050. In addition, as a functional configuration of the integrated control unit 12050, a microcomputer 12051, an audio/image output unit 12052, and an in-vehicle network interface (I/F) 12053 are illustrated.

The drive system control unit 12010 controls the operation of a device related to a vehicle drive system according to various programs. For example, the drive system control unit 12010 functions as control devices, such as a driving force generation device for generating a driving force for the vehicle, such as an internal combustion engine or a driving motor; a driving force transmission mechanism for transmitting the driving force to wheels; a steering mechanism for adjusting a turning angle of the vehicle; a braking device that generates braking force for the vehicle; and the like.

The body system control unit 12020 controls the operations of various devices mounted in the vehicle body, according to various programs. For example, the body system control unit 12020 functions as control devices for a keyless entry system, a smart key system, power window devices, or various lamps such as headlights, backup lights, brake lights, turn signals, fog lights, and the like. In this case, radio waves emitted from a portable device that substitutes for a key or signals from various switches can be input to the body system control unit 12020. The body system control unit 12020 receives the input of the radio waves or signals and controls door lock devices, power window devices, the lamps, and the like of the vehicle.

The external vehicle information detection unit 12030 detects information on the outside of the vehicle having the vehicle control system 12000 mounted thereon. For example, the external vehicle information detection unit 12030 is connected with an imaging unit 12031. The external vehicle information detection unit 12030 causes the imaging unit 12031 to capture an image of the exterior of the vehicle, and receives the captured image. The external vehicle information detection unit 12030 may perform object detection processing or distance detection processing of peoples, cars, obstacles, signs, and letters on the road based on the received image.

The imaging unit 12031 is an optical sensor that receives light and outputs an electrical signal according to the light reception amount of this light. The imaging unit 12031 can also output the electrical signal as an image or as distance measurement information. Furthermore, the light received by the imaging unit 12031 may be visible light or invisible light such as infrared light.

The internal vehicle information detection unit 12040 detects information on the inside of the vehicle. For example, a driver state detection unit 12041 that detects a state of a driver is connected to the internal vehicle information detection unit 12040. The driver state detection unit 12041 includes, for example, a camera that captures an image of a driver, and the internal vehicle information detection unit 12040 may calculate the degree of fatigue or concentration of the driver or may determine whether or not the driver is dozing based on detection information inputted from the driver state detection unit 12041.

The microcomputer 12051 can calculate a control target value of the driving force generation device, the steering mechanism, or the braking device based on the information on the outside or the inside of the vehicle acquired by the external vehicle information detection unit 12030 or the internal vehicle information detection unit 12040 and output a control command to the drive system control unit 12010. For example, the microcomputer 12051 can perform cooperative control for the purpose of implementing functions of an Advanced Driver Assistance System (ADAS) including collision avoidance or impact mitigation of a vehicle, following traveling based on an inter-vehicle distance, vehicle speed maintenance driving, vehicle collision warning, vehicle lane deviation warning, or the like.

Furthermore, the microcomputer 12051 can perform cooperative control for the purpose of automated driving or the like in which autonomous travel is performed without depending on operations by the driver, by controlling the driving force generation device, the steering mechanism, the braking device, or the like based on information about the surroundings of the vehicle acquired by the external vehicle information detection unit 12030 or the internal vehicle information detection unit 12040.

In addition, the microcomputer 12051 can output a control command to the body system control unit 12020 based on the information acquired about the outside of the vehicle by the external vehicle information detection unit 12030. For example, the microcomputer 12051 can perform cooperative control for the purpose of preventing glare, such as switching from a high beam to a low beam, by controlling the headlamp according to the position of a preceding vehicle or an oncoming vehicle detected by the external vehicle information detection unit 12030.

The audio/image output unit 12052 transmits an output signal of at least one of sound and an image to an output device capable of visually or audibly notifying a passenger or the outside of the vehicle about information. In the example in Fig. 22, an audio speaker 12061, a display unit 12062, and an instrument panel 12063 are illustrated as output devices. The display unit 12062 may include, for example, at least one of an onboard display and a heads-up display.

Fig. 23 is a diagram illustrating an example of an installation position of the imaging unit 12031.

In Fig. 23, a vehicle 12100 includes imaging units 12101, 12102, 12103, 12104, and 12105 as the imaging unit 12031.

For example, the imaging units 12101, 12102, 12103, 12104, and 12105 are provided at positions such as a front nose, side-view mirrors, a rear bumper, a back door, and an upper portion of a windshield in the vehicle interior of the vehicle 12100. The imaging unit 12101 provided at the front nose and the imaging unit 12105 provided in an upper portion of the windshield in the interior of the vehicle mainly capture images ahead of the vehicle 12100. The imaging units 12102 and 12103 provided at the side-view mirrors mainly acquire images on the sides of the vehicle 12100. The imaging unit 12104 provided at the rear bumper or the back door mainly captures images behind the vehicle 12100. Front view images acquired by the imaging unit 12101 and 12105 are mainly used for detecting preceding vehicles, pedestrians, obstacles, traffic lights, traffic signs, lanes, or the like.

Fig. 23 also illustrates an example of the imaging ranges of the imaging units 12101 to 12104. An imaging range 12111 indicates the imaging range of the imaging unit 12101 provided at the front nose, imaging ranges 12112 and 12113 respectively indicate the imaging ranges of the imaging units 12102 and 12103 provided at the side-view mirrors, and an imaging range 12114 indicates the imaging range of the imaging unit 12104 provided at the rear bumper or the back door. For example, by superimposing image data captured by the imaging units 12101 to 12104, a bird's-eye view image viewed from the upper side of the vehicle 12100 can be obtained.

At least one of the imaging units 12101 to 12104 may have a function for acquiring distance information. For example, at least one of the imaging units 12101 to 12104 may be a stereo camera including a plurality of imaging elements or may be an imaging element that includes pixels for phase difference detection.

For example, the microcomputer 12051 can extract, particularly, the closest three-dimensional object that is on a traveling path of the vehicle 12100 and that travels at a predetermined speed (e.g., 0 km/h or higher) in the substantially same direction as that of the vehicle 12100, as a preceding vehicle by obtaining a distance to each three-dimensional object in the imaging ranges 12111 to 12114 and a temporal change of this distance (a relative speed with respect to the vehicle 12100) based on the distance information obtained from the imaging units 12101 to 12104. Furthermore, the microcomputer 12051 can set an inter-vehicle distance that needs to be secured in advance in front of the preceding vehicle and can perform automated brake control (also including following stop control) or automated acceleration control (also including following start control). Thus, cooperative control can be performed for the purpose of, for example, automated driving in which autonomous travel is performed without depending on operations by the driver.

For example, the microcomputer 12051 can classify and extract three-dimensional data regarding three-dimensional objects into two-wheeled vehicles, normal vehicles, large vehicles, pedestrians, and other three-dimensional objects such as electric poles based on distance information obtained from the imaging units 12101 to 12104, and can use the three-dimensional data to perform automated avoidance of obstacles. For example, the microcomputer 12051 differentiates surrounding obstacles of the vehicle 12100 into obstacles that can be viewed by the driver of the vehicle 12100 and obstacles that are difficult to view. Furthermore, the microcomputer 12051 determines a collision risk indicating the degree of risk of collision with each obstacle, and when the collision risk is a setting value or more and there is a possibility of collision, outputs an alarm to the driver through the audio speaker 12061 or the display unit 12062, or performs forced deceleration or avoidance steering through the drive system control unit 12010, so that it is possible to perform driving support for collision avoidance.

At least one of the imaging units 12101 to 12104 may be an infrared camera that detects infrared rays. For example, the microcomputer 12051 can recognize a pedestrian by determining whether or not there is a pedestrian in the captured images of the imaging units 12101 to 12104. Such pedestrian recognition is performed by, for example, a procedure of extracting feature points in the captured images of the imaging units 12101 to 12104 that are infrared cameras, and a procedure of performing pattern matching processing on a series of feature points indicating an outline of an object and determining whether or not the object is a pedestrian. When the microcomputer 12051 determines that there is a pedestrian in the captured images of the imaging units 12101 to 12104 and recognizes the pedestrian, the audio/image output unit 12052 controls the display unit 12062 so as to superimpose a square contour line for emphasis on the recognized pedestrian to display. Furthermore, the audio/image output unit 12052 may control the display unit 12062 so as to display an icon indicating a pedestrian or the like at a desired position.

The example of the vehicle control system to which the technology according to the present disclosure can be applied has been described above. The technology according to the present disclosure can be applied to the imaging unit 12031, the external vehicle information detection unit 12030, and the like among the components described above. More specifically, for example, the imaging device 11 (210) and the imaging device according to the third embodiment including the optical element unit 301 can be applied to the imaging unit 12031. The image processing device 12 (412) can be applied to the external vehicle information detection unit 12030. By applying the technology according to the present disclosure to the imaging unit 12031, it is possible to reduce cost required to remove shielding objects adhering to the imaging unit 12031. By applying the technology according to the present disclosure to the external vehicle information detection unit 12030, it is possible to suppress deterioration of image quality of a captured image due to the optical element unit 31 (131, 151, 211, 241, 261, and 301) and the shielding objects. As a result, it is possible to improve safety and comfort of the driver.

Meanwhile, as used herein, a system means a collection of a plurality of components (such as devices, modules (components), or the like), and all the components may be located or not located in the same housing. Thus, a plurality of devices housed in separate housings and connected via a network and a single device in which a plurality of modules are housed in a single housing both constitute a system.

The embodiments of the present technology are not limited to the embodiments described above, and various changes can be made without departing from the gist of the present technology.

For example, an aspect obtained by combining all or part of the plurality of embodiments described above can be employed. For example, the optical element 61 may be formed of a repellent material for sessile organisms so to also have the biofouling structure. The optical element 221 (311) may also have the antifouling structure by disposing a plurality of fine protrusion parts on the surface (surface 311a) on the subject side. The protrusion parts may or may not have light permeability, or may or may not be arranged non-periodically. The shielding object information may be a combination of two or more of the category information, the alert information, the removal information, the prediction information, and the shielding rate information. The present technology can be also applied to objective lenses, ocular lenses, or the like of microscopes. In such a case, the antifouling structure (biofouling structure) of the optical element 61 (301) may be provided not on the surface on the incident light side, but on the surface on the emission light side, or on both surfaces on the incident light side and the emission light side. In the optical element unit 131 (151, 241, and 261), the optical element 61 (251) may be provided not on (the surface on) the incident light side of the condensing element 141 (161, 252, and 271), but on (the surface on) the emission light side, or may be provided on both (the surface on) the incident light side and (the surface on) the emission light side.

For example, the present technology may be configured as cloud computing in which a single function is cooperatively processed in a distributed manner via a network.

In addition, each step described in the flowchart discussed above can be executed by a single device, or executed by a plurality of devices in a distributed manner.

Furthermore, when a single step includes a plurality of types of processing, the plurality of types of processing included in the single step can be performed by a single device, or in a distributed manner by a plurality of devices.

It should be noted that the advantageous effects described in the present specification are merely exemplary and are not restrictive, and advantageous effects other than those described in the present specification may be produced.

The present technology can be configured as follows.

(1) An optical element that is disposed on an optical path from a subject to an imaging element is configured such that a plurality of fine recess parts or protrusion parts are disposed on a surface of the optical element so as to have different ray diffusion characteristics depending on a position on a cross section of an optical path.

(2) The optical element described in above (1) further includes a condensing element that is installed on the optical path between the imaging element and the optical element.

(3) The optical element described in above (2) is formed on a surface on an incident light side of the condensing element.

(4) The optical element described in any one of above (1) to (3) is formed using a repellent material for a sessile organism.

(5) An imaging device includes:

an optical element that is disposed on an optical path from a subject to an imaging element and is configured such that a plurality of fine recess parts or protrusion parts are disposed on a surface of the optical element so as to have different ray diffusion characteristics depending on a position on a cross section of an optical path; and the imaging element.

(6) The imaging device described in above (5) further includes a restoration unit that converts a captured image captured by the imaging element into an image of the subject.

[Reference Signs List]

| | |
|---|---|
| 10 | Imaging system |
| 11 | Imaging element |
| 12 | Image processing device |
| 31 | Optical element unit |
| 32 | Imaging element |

| | |
|---|---|
| 32a | Light reception surface |
| 41 | Restoration unit |
| 44 | Distribution generation unit |
| 45 | Output unit |
| 61 | Optical element |
| 61a | Surface |
| 62 | Protrusion part |
| 131 | Optical element unit |
| 141 | Condensing element |
| 151 | Optical element unit |
| 161 | Condensing element |
| 210 | Imaging device |
| 211 | Optical element unit |
| 221 | Optical element |
| 222 | Fine hole |
| 241 | Optical element unit |
| 251 | Optical element |
| 252 | Condensing element |
| 261 | Optical element |
| 271 | Condensing element |
| 301 | Optical element unit |
| 311 | Optical element |
| 312 | Groove part |
| 313 | Fine hole |
| 410 | Imaging system |
| 412 | Image processing device |
| 445 | Calculation unit |
| 447 | Prediction unit |

**Claims**

1. An optical element that is disposed on an optical path from a subject to an imaging element, wherein the optical element is configured such that a plurality of fine recess parts or protrusion parts are disposed on a surface of the optical element so as to have different ray diffusion characteristics depending on a position on a cross section of an optical path.

2. The optical element according to claim 1, further comprising a condensing element that is installed on the optical path between the imaging element and the optical element.

3. The optical element according to claim 2, wherein the optical element is formed on a surface on an incident light side of the condensing element.

4. The optical element according to claim 1, wherein the optical element is configured to be formed of a repellent material for a sessile organism.

5. An imaging device comprising:

an optical element that is disposed on an optical path from a subject to an imaging element, and is configured such that a plurality of fine recess parts or protrusion parts are disposed on a surface of the optical element so as to have different ray diffusion characteristics depending on a position on a cross section of an optical path; and the imaging element.

6. The imaging device according to claim 5, further comprising a restoration unit that converts a captured image captured by the imaging element into an image of the subject.

Fig. 1

Fig. 2

Fig. 3

Fig. 4

Fig. 5

Fig. 6

Fig. 7

```
        ( START IMAGING PROCESSING )
                     │
                     ▼
   ┌──────────────────────────────────┐
   │   LOAD RESTORATION PARAMETER,    │ S11
   │   GENERATION PARAMETER, AND      │
   │   SHIELDING OBJECT PARAMETER     │
   └──────────────────────────────────┘
                     │
                     ▼ ◄──────────────────────┐
              ╱ HAS       ╲   S12             │
             ╱ CAPTURED IMAGE ╲  NO           │
             ╲ BEEN INPUT?   ╱ ──────────┐    │
              ╲            ╱              │    │
                 │ YES                    │    │
                 ▼                        │    │
   ┌──────────────────────────────┐       │    │
   │   GENERATE RESTORED IMAGE    │ S13   │    │
   └──────────────────────────────┘       │    │
                 │                        │    │
                 ▼                        │    │
   ┌──────────────────────────────┐       │    │
   │   OUTPUT RESTORED IMAGE      │ S14   │    │
   └──────────────────────────────┘       │    │
                 │                        │    │
                 ▼                        │    │
   ┌──────────────────────────────┐       │    │
   │ DISTRIBUTION GENERATION PROCESSING │ S15 │    │
   └──────────────────────────────┘       │    │
                 │                        │    │
                 ▼                        │    │
   ┌──────────────────────────────┐       │    │
   │  CLASSIFICATION PROCESSING   │ S16   │    │
   └──────────────────────────────┘       │    │
                 │                        │    │
                 ▼                        │    │
              ╱          ╲   S17          │    │
             ╱   END?     ╲  NO           │    │
             ╲           ╱ ──────────────┴────┘
              ╲        ╱
                 │ YES
                 ▼
             (   END   )
```

Fig. 8

```
        ┌──────────────────────────────┐
        │     START DISTRIBUTION        │
        │  GENERATION PROCESSING        │
        └──────────────┬───────────────┘
                       ↓
        ┌──────────────────────────────┐ S31
        │   ACQUIRE RESTORED IMAGE      │
        └──────────────┬───────────────┘
                       ↓
        ┌──────────────────────────────┐ S32
        │  GENERATE PREDICTION IMAGE    │
        └──────────────┬───────────────┘
                       ↓
        ┌──────────────────────────────┐ S33
        │   OUTPUT PREDICTION IMAGE     │
        └──────────────┬───────────────┘
                       ↓
        ┌──────────────────────────────┐ S34
        │   ACQUIRE PREDICTION IMAGE    │
        └──────────────┬───────────────┘
                       ↓
        ┌──────────────────────────────┐ S35
        │  GENERATE DIFFERENCE IMAGE    │
        └──────────────┬───────────────┘
                       ↓
        ┌──────────────────────────────┐ S36
        │   OUTPUT DIFFERENCE IMAGE     │
        └──────────────┬───────────────┘
                       ↓
        ┌──────────────────────────────┐ S37
        │  GENERATE SHIELDING OBJECT    │
        │       DISTRIBUTION            │
        └──────────────┬───────────────┘
                       ↓
              ┌─────────────────┐
              │     RETURN       │
              └─────────────────┘
```

Fig. 9

```
        ┌─────────────────────────┐
        │   START CLASSIFICATION   │
        │       PROCESSING         │
        └─────────────────────────┘
                    │
                    ▼
   ┌──────────────────────────────┐
   │  ACQUIRE SHIELDING OBJECT     │  S51
   │        DISTRIBUTION           │
   └──────────────────────────────┘
                    │
                    ▼
   ┌──────────────────────────────┐
   │   SELECT SHIELDING OBJECT     │  S52
   │          CATEGORY             │
   └──────────────────────────────┘
                    │
                    ▼
   ┌──────────────────────────────┐
   │  OUTPUT CATEGORY INFORMATION  │  S53
   └──────────────────────────────┘
                    │
                    ▼
            ┌──────────────┐
            │   RETURN     │
            └──────────────┘
```

Fig. 10

Fig. 11

Fig. 12

Fig. 13

Fig. 14

Fig. 15

Fig. 16

Fig. 17

IMAGING DEVICE 11

31 OPTICAL ELEMENT
32 IMAGING ELEMENT

IMAGE PROCESSING DEVICE 412

446 STORAGE UNIT
41 RESTORATION UNIT
42 IMAGE GENERATION UNIT
43 DIFFERENCE COMPUTATION UNIT
44 DISTRIBUTION GENERATION UNIT
445 CALCULATION UNIT
447 PREDICTION UNIT

413 DISPLAY DEVICE

410

EP 4 683 337 A1

Fig. 18

```
         START IMAGING
         PROCESSING

LOAD RESTORATION PARAMETER    S111
AND GENERATION PARAMETER

              HAS              S112
          CAPTURED IMAGE
           BEEN INPUT?        NO

              YES

      GENERATE RESTORED IMAGE   S113

      OUTPUT RESTORED IMAGE     S114

    DISTRIBUTION GENERATION     S115
         PROCESSING

         SHIELDING RATE         S116
    CALCULATION PROCESSING

      PREDICTION PROCESSING     S117

              END?             S118
                              NO

              YES

              END
```

36

Fig. 19

```
┌──────────────────────────────┐
│   START SHIELDING RATE       │
│   CALCULATION PROCESSING     │
└──────────────────────────────┘
              │
              ▼
┌──────────────────────────────┐
│   ACQUIRE SHIELDING OBJECT    │ S131
│        DISTRIBUTION           │
└──────────────────────────────┘
              │
              ▼
┌──────────────────────────────┐
│   CALCULATE SHIELDING RATE    │ S132
└──────────────────────────────┘
              │
              ▼
┌──────────────────────────────┐
│     STORE SHIELDING RATE      │ S133
└──────────────────────────────┘
              │
              ▼
┌──────────────────────────────┐
│           RETURN              │
└──────────────────────────────┘
```

Fig. 20

```
            ╭─────────────────────╮
            │  START PREDICTION    │
            │     PROCESSING       │
            ╰─────────────────────╯
                      │
                      ▼
     ┌─────────────────────────────────────┐
     │  READ SHIELDING RATE HISTORY        │ S151
     └─────────────────────────────────────┘
                      │
                      ▼
     ┌─────────────────────────────────────┐
     │  PERFORM EXTRAPOLATION              │ S152
     │        OPERATION                    │
     └─────────────────────────────────────┘
                      │
                      ▼
     ┌─────────────────────────────────────┐
     │  OUTPUT PREDICTION INFORMATION      │ S153
     └─────────────────────────────────────┘
                      │
                      ▼
              ╭──────────────╮
              │   RETURN     │
              ╰──────────────╯
```

Fig. 21

EP 4 683 337 A1

Fig. 22

Fig. 23

## INTERNATIONAL SEARCH REPORT

| International application No. |
|---|
| **PCT/JP2024/006707** |

### A.    CLASSIFICATION OF SUBJECT MATTER

*H04N 23/55*(2023.01)i; *G02B 5/00*(2006.01)i; *G02B 5/02*(2006.01)i; *G03B 15/00*(2021.01)i; *G03B 30/00*(2021.01)i;
*H04N 23/95*(2023.01)i
FI:    H04N23/55; H04N23/95; G03B15/00 V; G03B15/00 S; G02B5/00 Z; G02B5/02 B; G03B30/00

According to International Patent Classification (IPC) or to both national classification and IPC

### B.    FIELDS SEARCHED

Minimum documentation searched (classification system followed by classification symbols)

   H04N23/55; H04N23/95; G02B5/00; G02B5/02; G03B15/00; G03B30/00

Documentation searched other than minimum documentation to the extent that such documents are included in the fields searched

   Published examined utility model applications of Japan 1922-1996
   Published unexamined utility model applications of Japan 1971-2024
   Registered utility model specifications of Japan 1996-2024
   Published registered utility model applications of Japan 1994-2024

Electronic data base consulted during the international search (name of data base and, where practicable, search terms used)

### C.    DOCUMENTS CONSIDERED TO BE RELEVANT

| Category* | Citation of document, with indication, where appropriate, of the relevant passages | Relevant to claim No. |
|---|---|---|
| X | US 2022/0347952 A1 (INDUSTRY-ACADEMIC COOPERATION FOUNDATION, YONSEI UNIVERSITY) 03 November 2022 (2022-11-03)<br>   paragraphs [0035], [0055]-[0059], fig. 1-5 | 1, 5, 6 |
| A | | 2-4 |
| X | KR 10-2021-0047486 A (INDUSTRY-ACADEMIC COOPERATION FOUNDATION, YONSEI UNIVERSITY) 30 April 2021 (2021-04-30)<br>   paragraphs [0014]-[0039], fig. 1-5 | 1, 5, 6 |
| A | | 2-4 |
| A | WO 2019/055823 A1 (INNOVENT TECHNOLOGIES, LLC) 21 March 2019 (2019-03-21)<br>   paragraphs [0023], [0026] | 4 |
| A | CN 110412813 A (SHANGHAI RAINBOWFISH OCEAN TECHNOLOGY CO., LTD.) 05 November 2019 (2019-11-05)<br>   paragraph [0020] | 4 |

☐ Further documents are listed in the continuation of Box C.        ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **15 April 2024** | **23 April 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/006707**

| Patent document cited in search report | | | Publication date (day/month/year) | Patent family member(s) | | | Publication date (day/month/year) |
|---|---|---|---|---|---|---|---|
| US | 2022/0347952 | A1 | 03 November 2022 | KR 10-2022-0149423 | | A | |
| KR | 10-2021-0047486 | A | 30 April 2021 | (Family: none) | | | |
| WO | 2019/055823 | A1 | 21 March 2019 | US | 2019/0084015 | A1 | |
| | | | | EP | 3684429 | A1 | |
| | | | | CA | 3075272 | A | |
| CN | 110412813 | A | 05 November 2019 | (Family: none) | | | |

Form PCT/ISA/210 (patent family annex) (July 2022)

**EP 4 683 337 A1**

**Patent documents cited in the description**

- JP 2022547672 W

- JP 2022131226 A